# EUROPEAN PATENT APPLICATION

(11) **EP 3 978 311 A1**
(43) Date of publication of application: **06.04.2022**
(21) Application number: 19930824.8
(22) Date of filing: 30.05.2019
(51) Int. Cl.: B60Q 3/14, F21V 7/00

(54) **STEREOSCOPIC LIGHTING DEVICE FOR VEHICLE CLUSTER**

(30) Priority: 29.05.2019 KR 20190063041
(71) Applicant: StudioV2V Inc., Incheon 21984 (KR)
(72) Inventor: AN, Hee Soo, Incheon 22001 (KR); JUNG, Il Hee, Incheon 21982 (KR)
(74) Representative: Hoefer & Partner Patentanwälte mbB
(86) International application number: PCT/KR2019/006507
(87) International publication number: WO 2020/241928

(57) **Abstract**

The present invention provides a technology that realizes stereoscopic lighting with a natural texture by using structural characteristics of a real object, and more specifically, a technology that enables stereoscopic lighting to be realized with a natural texture, the stereoscopic lighting being generated from infinite repetition of light reflection between a plurality of reflection members which face to each other by separately disposing the reflection members having different reflectance from each other in a frontward-rearward direction in a vehicle cluster and then applying light radiation into a separation-formed space. In particular, the present invention provides a technology that enables a driver to have optimized stereoscopic visibility by obliquely disposing a reflection member (for example, front surface of a rear reflection member), on which an image is formed, of the reflection members toward eyes of the driver. The present invention has an advantage of a remarkable reduction in eye strain of a driver due to latest 3D graphic light emission type of cluster by using infinite repetition of light reflection between a rear reflection member and a front reflection member which are real objects.

## Description

### [Technical Field]

The present invention relates to a technology that realizes stereoscopic lighting with a natural texture by using structural characteristics of a real object.

More specifically, the present invention relates to a technology that enables stereoscopic lighting to be realized with a natural texture, the stereoscopic lighting being formed by infinite repetition of light reflection between a plurality of reflection members which face to each other by separately disposing the reflection members having different reflectance from each other in a frontward-rearward direction in a vehicle cluster and then applying light radiation into a separation-formed space.

In particular, the present invention relates to a technology that enables a driver to have optimized stereoscopic visibility by obliquely disposing a reflection member (for example, front surface of a rear reflection member), on which an image is formed, of the reflection members toward eyes of the driver.

### [Background Art]

In general, a so-called cluster that presents current information of a vehicle is positioned on a dashboard at which a steering wheel is positioned in the vehicle.

The cluster is formed into a dashboard shape and presents information (for example, speed, RPM, or the like) of a current state depending on manipulation performed by a driver or a vehicle operation. In other words, the cluster has several markings which represent speed, RPM, or the like and are arranged in a circle, and a needle which has one end portion that is fixed and which presents a current state of a vehicle by rotating along the circle with a central portion of the circle as a rotational axis.

A cluster in the related art is realized in an analog pattern configured of real objects (for example, LED markings and LED needles) as markings or needles of a dashboard. Recently, a cluster (for example, YouTube search words of 'Benz W222 Cluster' or 'BMW Z4 Cluster') which is installed in a luxury vehicle is particularly realized as a computer graphic-rendered digital pattern of display provided on the cluster.

As described above, a rendered computer graphic displayed on a cluster can effectively present more advanced graphic than analog instruments; however, problems arise in that the computer graphic does not provide a highly natural texture which is provided by analog characteristics of a real object and can rather bring about eye strain to a driver.

Consequently, there is a demand for realization of a technology which can solve the problems in the related art by realizing stereoscopic lighting that enables a natural texture to be displayed using structural characteristics of a real object.

### [Summary of Invention]

### [Technical Problem]

The present invention is made with consideration for such problems in the related art, and an object of the present invention is to provide a stereoscopic lighting device for a vehicle cluster which is capable of having a 3D lighting effect by using structural characteristics of a real object.

In addition, another object of the present invention is to provide a stereoscopic lighting device for a vehicle cluster which realizes a 3D lighting effect in an optimized direction to a driver of a vehicle, the 3D lighting effect being acquired by using characteristics of a real object.

### [Solution to Problem]

The present invention to achieve the objects described above provides a stereoscopic lighting device for a vehicle cluster including a cluster housing of a vehicle and a cluster dashboard which is mounted on a front surface of the cluster housing and displays current information of the vehicle, the stereoscopic lighting device including: a front reflection member 110 that is mounted on the front surface of the cluster housing corresponding to a side part of the cluster dashboard and has predetermined reflectance so as to transmit a part of light radiating from outside and reflect a part of the light; a rear reflection member 120 that is mounted on the cluster housing to be separated rearward from the front reflection member by a predetermined distance and has relatively higher reflectance than the front reflection member so as to reflect light radiating from outside; a side-wall support member 130 that is formed to project frontward along an edge of a front surface of the rear reflection member and forms an internal space in cooperation with the rear reflection member and the front reflection member; and a plurality of light emitting bodies 140 that form a light emitting line by being mounted on some regions of the side-wall support member along the edge of the front surface of the rear reflection member. Stereoscopic lighting is formed from a gradual reduction in amount of reflection depending on the reflectance of the front reflection member in a process in which the rear reflection member 120 and the front reflection member 130 that have respective surfaces facing each other repetitively and alternately reflect light radiating from the light emitting bodies toward the side-wall support member disposed opposite the light emitting line when the light emitting bodies 140 emit light to the front surface of the rear reflection member or a rear surface of the front reflection member.

Here, the rear reflection member 120 may be configured to totally reflect light radiating to the front surface of the rear reflection member. In addition, the rear reflection member 120 may be obliquely disposed such that the front surface of the rear reflection member is directed toward a center extension line of the cluster dashboard.

On the one hand, the front reflection member 110, the rear reflection member 120, the side-wall support member 130, and the light emitting bodies 140 may be each disposed at a plurality of locations to have vertical symmetry about the cluster dashboard.

Further, the front reflection member 110, the rear reflection member 120, the side-wall support member 130, and the light emitting bodies 140 may be each disposed at a plurality of locations to have horizontal symmetry about the cluster dashboard.

On the other hand, a pattern of the stereoscopic lighting may be configured to be adjusted by prominences and depressions formed on the front surface of the rear reflection member 120, the prominences and depressions having alternately different projection heights from each other in a traveling direction of the stereoscopic lighting.

Further, the light emitting bodies 140may have a plurality of radiation patterns of light radiating to the front surface of the rear reflection member or the rear surface of the front reflection member.

### [Advantageous Effects of Invention]

The present invention has an advantage of providing a natural stereoscopic texture for a driver by realizing a 3D lighting effect using infinite repetition of light reflection between a rear reflection member and a front reflection member which are real objects.

In addition, the present invention has an advantage of a remarkable reduction in eye strain of a driver due to latest 3D graphic light emission type of cluster by using infinite repetition of light reflection between a rear reflection member and a front reflection member which are real objects.

In addition, the present invention has an advantage of enhancing optimized stereoscopic visibility for a driver among occupants by obliquely disposing a rear reflection member such that the rear reflection member is directed toward a field of view of the driver.

### [Brief Description of Drawings]

FIG. 1 is a view illustrating a vehicle cluster which is equipped with a stereoscopic lighting device according to an embodiment of the present invention.
FIG. 2 is a view illustrating a state where a front reflection member and a control board are detached from a cluster housing illustrated in FIG. 1.
FIG. 3 is a view illustrating a state where a rear reflection member, a side-wall support member, and light emitting bodies are detached from a through-region of the cluster housing illustrated in FIG. 2.
FIG. 4 is a view illustrating a state where the rear reflection member is detached from the side-wall support member after the rear reflection member, the side-wall support member, the light emitting bodies, and the front reflection member are taken out from the state illustrated in FIG. 3.
FIG. 5 is an enlarged view illustrating the side-wall support member and the light emitting bodies illustrated in FIG. 4.
FIG. 6 is a view illustrating a direction of infinitely repetitive reflection of stereoscopic lighting on a front view illustrating a state where the rear reflection member, the side-wall support member, the light emitting bodies, and the front reflection member are coupled to each other illustrated in FIG. 4.
FIG. 7 is a view illustrating infinitely repetitive reflection of stereoscopic lighting when the rear reflection member, the side-wall support member, the light emitting bodies, and the front reflection member which correspond to a left side of FIG. 6 are viewed from an underside surface.
FIG. 8 is a view illustrating a field of view of a driver with respect to an image of stereoscopic lighting when the state illustrated in FIG. 6 is viewed from above.
FIG. 9 is a view illustrating a direction opposite the direction of infinitely repetitive reflection of stereoscopic lighting illustrated in FIG. 6, as positions of light emitting bodies which are mounted on the side-wall support member are changed from FIG. 6, as another embodiment of the present invention.

### [Description of Embodiments]

Hereinafter, the present invention will be described in detail with reference to the drawings.

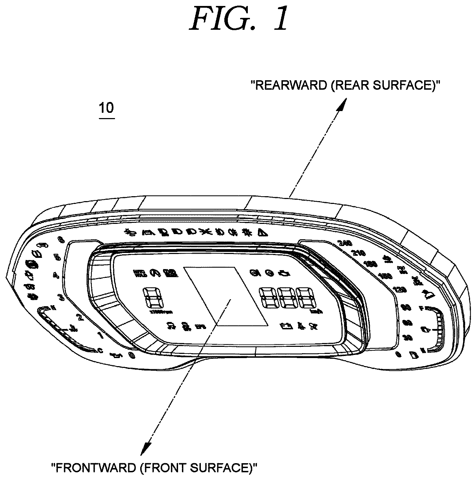

FIG. 1 is a view illustrating a vehicle cluster which is equipped with a stereoscopic lighting device according to an embodiment of the present invention. With reference to FIG. 1, the stereoscopic lighting device according to the present invention is mounted on a vehicle cluster 10, and the vehicle cluster 10 is mounted on a part of a dashboard of a vehicle on which a steering wheel is positioned. In FIG. 1, 'frontward or front surface' represents a side of a driver seat on which a driver is positioned, and 'rearward or rear surface' represents a frontward direction of a vehicle as a direction in which the device is mounted on a dashboard of the vehicle.

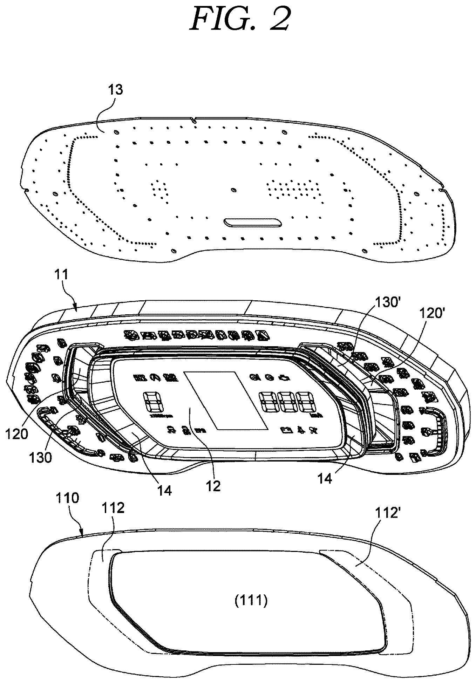

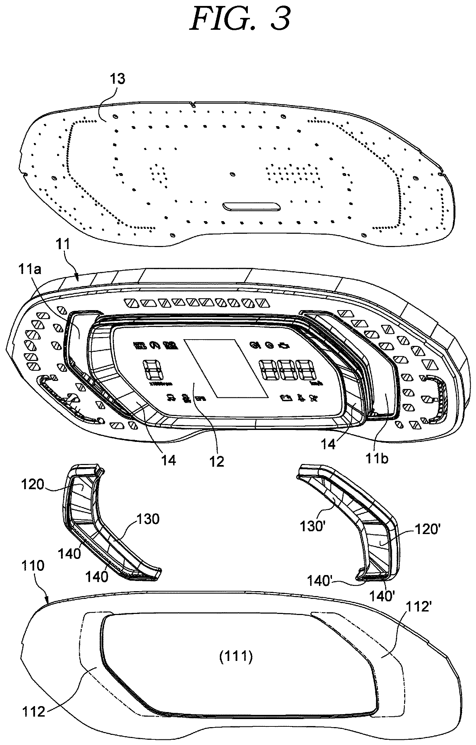

FIG. 2 is a view illustrating a state where a front reflection member 110 and a control board 13 are detached from a cluster housing 11 in FIG. 1. FIG. 3 is a view illustrating a state where rear reflection members 120 and 120', side-wall support members 130 and 130', and light emitting bodies 140 and 140' are detached from a through-region of the cluster housing 11 illustrated in FIG. 2.

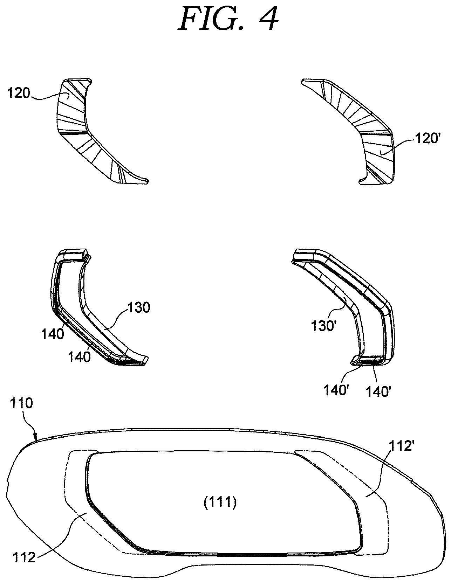

FIG. 4 is a view illustrating a state where the rear reflection members 120 and 120' are detached from the side-wall support members 130 and 130' after the rear reflection members 120 and 120', the side-wall support members 130 and 130', the light emitting bodies 140 and 140', and the front reflection member 110 are taken out from the state illustrated in FIG. 3.

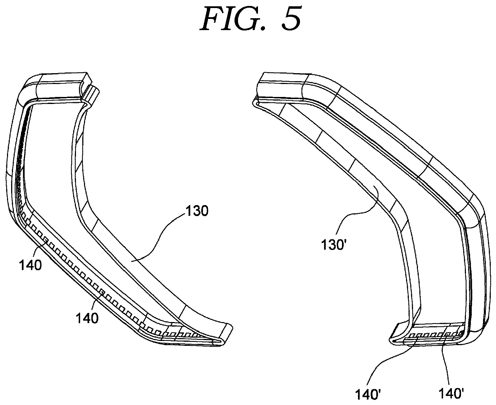

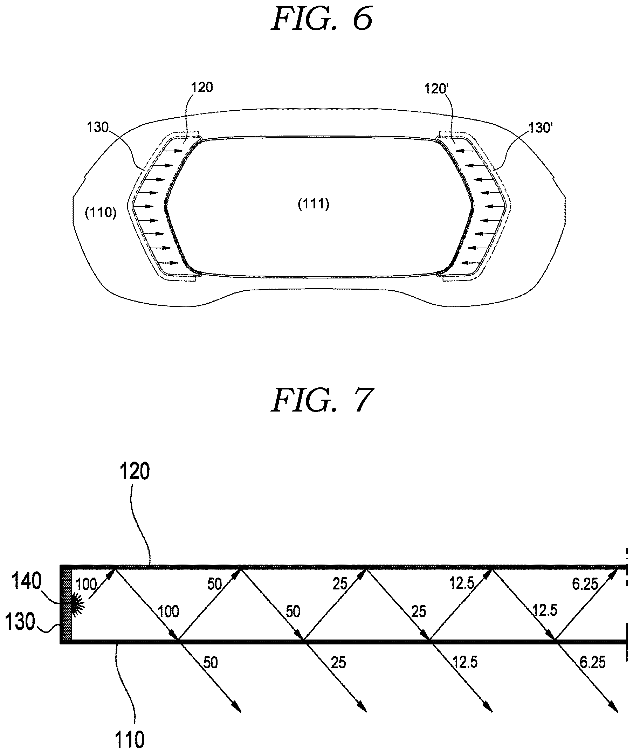

FIG. 5 is an enlarged view illustrating the side-wall support members 130 and 130' and the light emitting bodies 140 illustrated in FIG. 4. FIG. 6 is a view illustrating a direction of infinitely repetitive reflection of stereoscopic lighting on a front view illustrating a state where the rear reflection members 120 and 120', the side-wall support members 130 and 130', the light emitting bodies 140, and the front reflection member 110 are coupled to each other illustrated in FIG. 4.

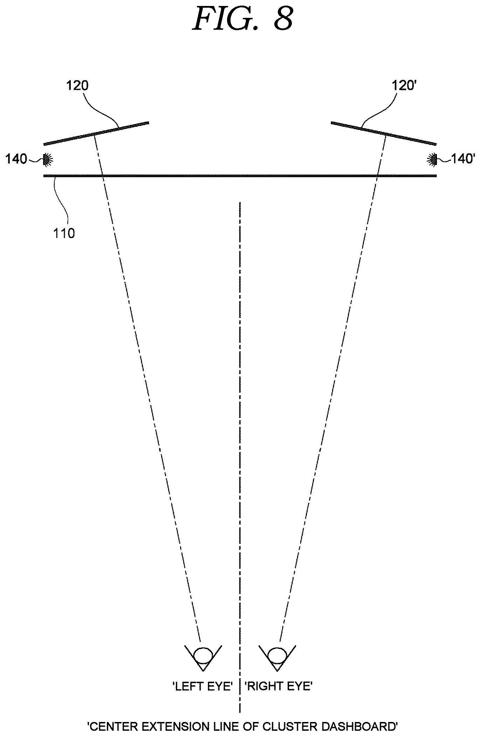

FIG. 7 is a view illustrating infinitely repetitive reflection of stereoscopic lighting when the rear reflection member 120, the side-wall support member 130, the light emitting bodies 140, and the front reflection member 110 which correspond to a left side of FIG. 6 are viewed from an underside surface. FIG. 8 is a view illustrating a field of view of a driver with respect to an image of stereoscopic lighting when the state illustrated in FIG. 6 is viewed from above.

With reference to FIGS. 2 to 8, the present invention is a stereoscopic lighting device for a vehicle cluster configured of the cluster housing 11 and a cluster dashboard 12, and the stereoscopic lighting device for a vehicle cluster is configured to include the front reflection member 110, the rear reflection member 120, the side-wall support member 130, and the light emitting bodies 140.

The front reflection member 110 is mounted on a front surface of the cluster housing 11 corresponding to a side part of the cluster dashboard 12 as illustrated in FIGS. 2 to 4 and is configured to have predetermined reflectance (for example, 50%) so as to transmit a part (for example, 50%) of light radiating from outside and reflect the rest (for example, 50%) of the light.

The rear reflection members 120 and 120' are mounted on the cluster housing 11 to be separated rearward from the front reflection member 110 by a predetermined distance as illustrated in FIGS. 2 to 4 and has relatively higher reflectance than the front reflection member 110 so as to reflect light radiating from outside. In this case, the rear reflection members 120 and 120' can be configured of a mirror having reflectance of virtually 100%.

Here, the front reflection member 110 can be configured of glass or a plastic material as a transparent material having specific reflectance. In addition, the rear reflection members 120 and 120' can be configured of glass, a mirror, a plastic material, or a metal material which has specific reflectance. In this case, in order to realize the stereoscopic lighting according to the present invention, the rear reflection members 120 and 120' are selected to have higher reflectance than the front reflection member 110.

The side-wall support members 130 and 130' are formed to project frontward along edges of front surfaces of the rear reflection members 120 and 120' as illustrated in FIGS. 2 to 5 and form an internal space in cooperation with the rear reflection members 120 and 120' and the front reflection member 110.

A plurality of light emitting bodies 140 and 140' form a light emitting line by being mounted on some regions of the side-wall support members 130 and 130' along the edges of the front surfaces of the rear reflection members 120 and 120' as illustrated in FIGS. 3 to 5.

According to the embodiment of the present invention, the light emitting bodies 140 and 140' are disposed in some regions corresponding to an outer portion of the side-wall support members 130 and 130' as illustrated in FIG. 5. Consequently, as illustrated in FIG. 7, light radiating from the light emitting bodies 140 is reflected in an infinitely repetitive pattern between the front reflection member 110 and the rear reflection member 120.

In other words, with reference to FIG. 7, when the light emitting bodies 140 emit light to the front surface of the rear reflection member 120 or a rear surface of the front reflection member 110, the rear reflection member 120 and the front reflection member 130 which have respective surfaces facing each other alternately reflect light radiating from the light emitting bodies 140 in an infinitely repetitive manner. As a result, as illustrated by arrows in FIG. 6, the stereoscopic lighting is obtained from a gradual reduction in amount of reflection depending on the reflectance of the front reflection member 110 while light is reflected alternately toward the side-wall support member 130, which is disposed opposite the light emitting line, in an infinitely repetitive manner.

Here, the stereoscopic lighting formed from the gradual reduction in amount of reflection depending on the reflectance of the front reflection member 110 enables a driver to experience a dimming phenomenon in which intensity of light gradually decreases along an arrow direction in FIG. 6, in a field of view toward a front surface of the vehicle cluster 10.

Further, the light radiating from the light emitting bodies 140 toward the side-wall support member 130 which is disposed opposite the light emitting line as illustrated in FIG. 6 means that the light is directed toward an opening region 111 of the front reflection member 110 on which the cluster dashboard 12 is mounted, in the embodiment of the present invention.

On the one hand, as illustrated in FIG. 7, it is desirable that the rear reflection member 120 be configured of a material which totally reflect light radiating to the front surface of the rear reflection member. Since an image is formed on the front surface of the rear reflection member 120 in a process of reflecting light in the infinitely repetitive manner toward the side-wall support member 130 which is disposed opposite the light emitting line between the front reflection member 110 and the rear reflection member (120), and the rear reflection member 120 can be configured to have the reflectance of 100% so as to perform total reflection such that light as an image formed on the front surface of the rear reflection member 120 can be clearly seen.

Further, FIG. 7 illustrates a case where the front reflection member 110 has the reflectance of 50%, and the rear reflection member 120 has the reflectance of 100%. In this case, the front reflection member 110 can have the reflectance of 40%, and the rear reflection member 120 can have the reflectance of 90%, for example. Here, only when the reflectance of the rear reflection member 120 is higher than the reflectance of the front reflection member 110, the stereoscopic lighting formed from the infinite repetition can be seen by a driver who is positioned frontward of the vehicle cluster 10 as illustrated in FIGS. 1 to 3.

In addition, the front reflection member 110 can be configured to have different reflectance for each region along a light traveling direction, and the rear reflection member 120 can also be configured to have different reflectance for each region along a light traveling direction.

As described above, when one reflection member 110 or 120 is configured to have different degrees of reflectance, stereoscopic lighting that is sharply demarcated at boundaries at which the reflectance is changed along the light traveling direction can be realized.

On the other hand, with reference to FIG. 8, it is desirable that the rear reflection member 120 be obliquely disposed such that the front surface of the rear reflection member is directed toward a center extension line of the cluster dashboard 12.

In the present invention, an image is formed on the front surface of the rear reflection member 120 with part of light transmitted through the front reflection member 110 as illustrated in FIG. 7 in a process of reflecting light in the infinitely repetitive manner toward the side-wall support member 130 which is disposed opposite the light emitting line between the front reflection member 110 and the rear reflection member 120. In this configuration, a person's eye located at a position orthogonal to the rear reflection member 120 can appreciate the stereoscopic lighting.

Consequently, the front surface of the rear reflection member 120 is disposed at an angle as similar to a viewing angle of a virtual driver seated on a driver seat as possible by obliquely disposing the rear reflection member 120 as illustrated in FIG. 8, and thereby the stereoscopic lighting realized on the cluster dashboard 12 is to have optimized stereoscopic visibility to the driver.

Further, as illustrated in FIGS. 3 to 6, the front reflection members 110 and 110', the rear reflection member 120 and 120', the side-wall support members 130 and 130', and the light emitting bodies 140 and 140' can be disposed at a plurality of locations to have horizontal symmetry about the cluster dashboard 12.

Here, the front reflection members 110 and 110', the rear reflection members 120 and 120', the side-wall support members 130 and 130', and the light emitting bodies 140 and 140' can be disposed at a plurality of locations to have horizontal symmetry about the cluster dashboard 12.

On the other hand, a pattern of the stereoscopic lighting can be configured to be adjusted by forming prominences and depressions on the front surface of the rear reflection member 120, the prominences and depressions having alternately different projection heights from each other in a traveling direction of the stereoscopic lighting.

In other words, since the stereoscopic lighting which is reflected between the front reflection member 110 and the rear reflection member 120 in the infinite repetitive manner is reflected at an angle on the front surface of the rear reflection member 120 in a reflection process and the angle abruptly changes for each alternate prominence and depression, an image formed on the rear reflection member 120 abruptly changes for each of the alternate prominence and depression. In this case, the driver who sees from the front surface of the vehicle cluster 10 sees a pattern of stereoscopic lighting which alternately changes for each alternate prominence and depression.

Also in this case, the stereoscopic lighting obtained from the gradual reduction in amount of reflection depending on the reflectance of the front reflection member 110 is also formed all along the arrow direction in FIG. 6.

Further, the light emitting bodies 140 can have a plurality of radiation patterns of light radiating to the front surface of the rear reflection member 120 or the rear surface of the front reflection member 110. In other words, the light emitting bodies 140 can be configured to form various radiation patterns of initial light radiating between the front reflection member 110 and the rear reflection member 120, examples of the radiation patterns including a star shape, a triangular shape, a quadrangular shape, a long bar shape, or a short bar shape.

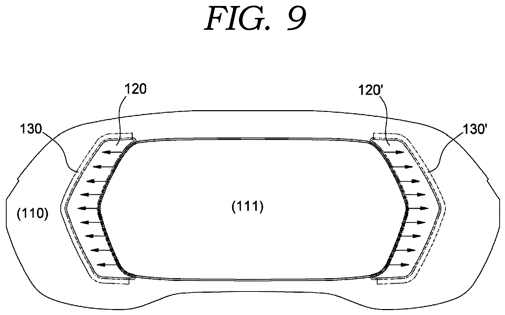

FIG. 9 is a view illustrating a direction opposite the direction of infinitely repetitive reflection of stereoscopic lighting illustrated in FIG. 6, as the positions of the light emitting bodies which are mounted on the side-wall support member are changed from FIG. 6, as another embodiment of the present invention.

According to the other embodiment of the present invention, a light emitting line formed by a plurality of light emitting bodies 140 and 140' is realized on the side-wall support members 130 and 130' which are disposed opposite the light emitting line in the embodiment of the present invention.

As a result, stereoscopic lighting is formed from a gradual reduction in amount of reflection depending on the reflectance of the front reflection members 110 and 110' in a process in which the rear reflection members 120 and 120' and the front reflection members 130 and 130' that have respective surfaces facing each other alternately reflect light radiating from the light emitting bodies 140 and 140' in an infinite repetitive manner toward the side-wall support members 130 and 130' disposed opposite the light emitting line as illustrated in FIG. 9 when the light emitting bodies 140 and 140' emit light to the front surface of the rear reflection members 120 and 120' or the rear surface of the front reflection members 110 and 110' as illustrated in FIG. 7.

Here, the stereoscopic lighting formed from the gradual reduction in amount of reflection depending on the reflectance of the front reflection members 110 and 110' enables a driver to experience a dimming phenomenon in which intensity of light gradually decreases along an arrow direction in FIG. 9, in a field of view toward the front surface of the vehicle cluster 10.

## Claims

1. A stereoscopic lighting device for a vehicle cluster including a cluster housing of a vehicle and a cluster dashboard which is mounted on a front surface of the cluster housing and displays current information of the vehicle, the stereoscopic lighting device comprising:
a front reflection member 110 that is mounted on the front surface of the cluster housing corresponding to a side part of the cluster dashboard and has predetermined reflectance so as to transmit a part of light radiating from outside and reflect a part of the light;
a rear reflection member 120 that is mounted on the cluster housing to be separated rearward from the front reflection member by a predetermined distance and has relatively higher reflectance than the front reflection member so as to reflect light radiating from outside;
a side-wall support member 130 that is formed to project frontward along an edge of a front surface of the rear reflection member and forms an internal space in cooperation with the rear reflection member and the front reflection member; and
a plurality of light emitting bodies 140 that form a light emitting line by being mounted on some regions of the side-wall support member along the edge of the front surface of the rear reflection member,
wherein stereoscopic lighting is formed from a gradual reduction in amount of reflection depending on the reflectance of the front reflection member in a process in which the rear reflection member 120 and the front reflection member 130that have respective surfaces facing each other repetitively and alternately reflect light radiating from the light emitting bodies toward the side-wall support member disposed opposite the light emitting line when the light emitting bodies 140 emit light to the front surface of the rear reflection member or a rear surface of the front reflection member.

2. The stereoscopic lighting device for a vehicle cluster according to 1,
wherein the rear reflection member 120 is configured to totally reflect light radiating to the front surface of the rear reflection member.

3. The stereoscopic lighting device for a vehicle cluster according to 2,
wherein the rear reflection member 120 is obliquely disposed such that the front surface of the rear reflection member is directed toward a center extension line of the cluster dashboard.

4. The stereoscopic lighting device for a vehicle cluster according to 3,
wherein the front reflection member 110, the rear reflection member 120, the side-wall support member 130, and the light emitting bodies 140 are each disposed at a plurality of locations to have vertical symmetry about the cluster dashboard.

5. The stereoscopic lighting device for a vehicle cluster according to 3,
wherein the front reflection member 110, the rear reflection member 120, the side-wall support member 130, and the light emitting bodies 140 are each disposed at a plurality of locations to have horizontal symmetry about the cluster dashboard.

6. The stereoscopic lighting device for a vehicle cluster according to 4 or 5, wherein a pattern of the stereoscopic lighting is adjusted due to prominences and depressions formed on the front surface of the rear reflection member 120, the prominences and depressions having alternately different projection heights from each other in a traveling direction of the stereoscopic lighting.

7. The stereoscopic lighting device for a vehicle cluster according to 6,
wherein the light emitting bodies 140 have a plurality of radiation patterns of light radiating to the front surface of the rear reflection member or the rear surface of the front reflection member.
